# EUROPEAN PATENT APPLICATION

(11) **EP 1 544 493 A1**
(43) Date of publication of application: **22.06.2005**
(21) Application number: 04257881.5
(22) Date of filing: 16.12.2004
(51) Int. Cl.: F16D 55/2265, F16D 65/12, F16D 65/54, F16D 65/56

(54) **Disc sliding mechanism**

(30) Priority: 18.12.2003 GB 0329425
(71) Applicant: Meritor Heavy Vehicle Braking Systems (UK) Limited, Cwmbran, Gwent NP44 3XU (GB)
(72) Inventor: Ward, Andrew John, Cottesbrooke Northampton NN6 8PH (GB); Holl, Franz Helmut, 56869 Masterhausen Rheinland - Realz (DE); Taylor, Martin Pors, Cwmbran Torfaen NP44 3ND (GB); McCann, Denis John, Rochester Hills Michigan 48309 (US); Cattaneo, Stefano, Magenta (IT); Norman, Mark Anthony, Mid Glamorgan South Wales CF31 3LB (GB); Jackson, Jonathan Leslie Christopher, Ross-on-Wye Herefordshire HR9 6EA (GB); Heinlein, Carl Edward, Langstone Newport NP18 2JR (GB)
(74) Representative: Barton, Russell Glen

(57) **Abstract**

A brake system (10) including
a brake disc (28) having first and second disc faces (28A,28B) on respective first and second sides of the brake disc and being mounted rotatably fast with but longitudinally slidable on a rotatable shaft (14),
the brake disc (28) being clampable between a first friction surface (22) of a fixed brake pad (20) positioned on the first side and a second friction surface (26) of a moveable brake pad (26) positioned on the second side,
the system further including
   a disc positioner (32) operable to define a running clearance between the first disc face and the first friction surface (22), the disc positioner being (32) adjustable to maintain the running clearance as the first brake pad (20) wears,
   and biasing means (36) located on the second side of the disc brake which biasing means (36) maintains contact between the disc positioner (32) and first face of the disc.

## Description

This invention relates to brake systems, and devices for positioning discs within brake systems.

Most conventional disc brake systems have a fixed brake disc and a caliper configuration with a piston and cylinder. The caliper includes a sliding bridge which slides on pins, and a pair of brake pads: an outer brake pad on the outboard end (wheel side) of the bridge and an inner brake pad on the inboard end (chassis side) of the bridge. The fixed brake disc is located between the outer and inner brake pads and is fixed rotatably and axially fast with a shaft which is connected to the wheel.

Operation of the brake, forces the piston to engage and slide the inner brake pad along the bridge into contact with the inside face of the fixed disc. A reaction force causes the slidable caliper to slide on the pins and force the outer brake pad into contact with the outer side of the fixed brake disc. In this way equal forces are applied to the brake disc from outer and inner pads. Frictional engagement of the disc with the pads causes deceleration of the clamped disc and therefore decelerates the connected wheel and consequently the vehicle. When the brake is released the pads return to a position where there is a running clearance between the pads and disc.

It is an object of the present invention to provide an improved braking system.

According to a first aspect of the invention there is provided a brake system including a brake disc having first and second disc faces on respective first and second sides of the brake disc and being mounted rotatably fast with but longitudinally slidable on a rotatable shaft, the brake disc being clampable between a first friction surface of a fixed brake pad positioned on the first side and a second friction surface of a moveable brake pad positioned on the second side, the system further including a disc positioner operable to define a running clearance between the first disc face and the first friction surface, the disc positioner being adjustable to maintain the running clearance as the first brake pad wears.

Embodiments of the invention will now be described, by way of example only, with reference to the accompanying drawings in which:
Figure 1 is a schematic view of the slidable brake disc system according to the invention in the brake off position;
Figure 2 is a schematic view of the brake disc system of Figure 1 with the brake applied;
Figure 3 is a schematic view of the brake disc system of Figure 1 in the brake off position with a large amount of pad wear of the outboard fixed brake pad;
Figure 4 is a schematic view of the brake disc system of Figure 3 with the brake applied after significant wear of the outward fixed pad;
Figure 5 is a schematic view of a second embodiment of the brake disc system according to the invention shown with the brake applied;
Figure 6 is a schematic view of the brake disc system of Figure 5 also with the brake applied but with a significant large amount of pad wear of the outboard fixed brake pad;
Figure 7 is a schematic view of a fixed brake disc, sliding caliper brake system according to the invention depicted with the brake applied;
Figure 8 is a schematic view of the fixed brake disc system of Figure 7 shown in the brake off position;
Figure 9 is a schematic cross sectional view of the interface between brake disc and shaft of a fourth embodiment of brake disc system in accordance with the invention;
Figure 10 is a schematic side view of the interface between shaft and brake disc of the system of Figure 9;
Figure 11 is a schematic side view of the interface of brake disc and shaft figures 9 and 10 but depicted after significant pad wear of the outward fixed pad; and
Figure 12 is a schematic side view of the interface between shaft and brake disc of a fifth embodiment of brake disc system in accordance with the invention.

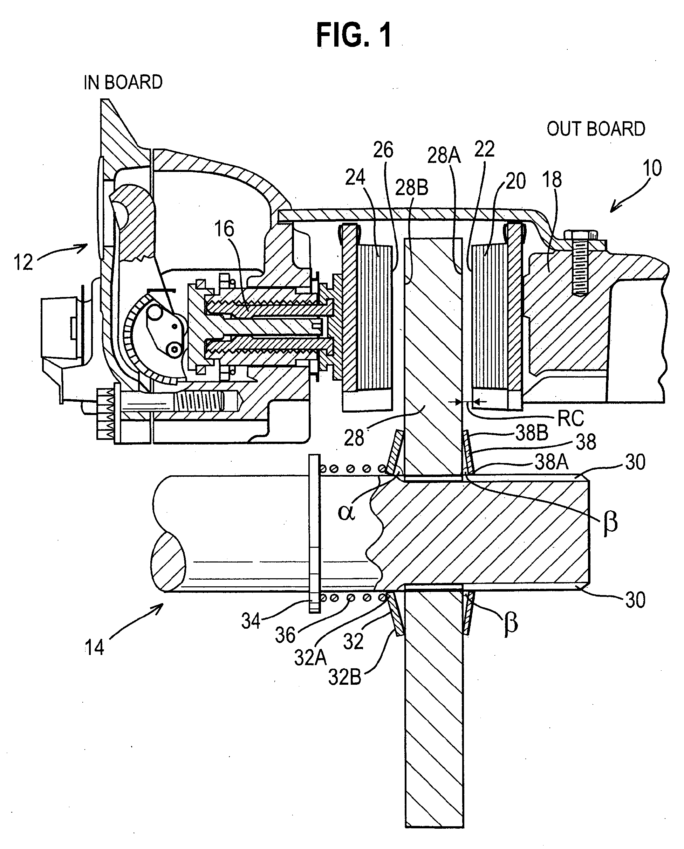

Referring to Figure 1 there is shown a brake disc system 10 in accordance with the invention including a caliper 12 fixed relative to a suspension component of a vehicle (not shown) and a shaft 14 which is connected to the wheel (not shown) of the vehicle. The caliper 12 includes a piston 16 and an oppositly facing end 18. The caliper 12 also includes two brake pads: a fixed brake pad 20 connected to end 18 and a moveable brake pad 24 connected to the piston 16. The fixed pad 20 and moveable pad 26 have a first friction surface 22 and a second friction surface 26 respectively.

Located between the two brake pads 20 and 24 is a brake disc 28 mounted about the shaft 14. The brake disc 28 defines an outboard side (the side to the right of the disc 28 in Figure 1) and an inboard side (the side to the left of the disc 28 in Figure 1)

Brake disc 28 has a first face 28A on the outboard side which face is substantially parallel to the first friction surface 22 and a second face 28B which face is substantially parallel to second surface 26 of the moveable brake pad 24.

The brake disc 28 is rotatably fast with but longitudinally slidable with the shaft 14. The disc slides along splines 30 on the surface of shaft 14.

On the inboard side of the brake disc 28 there is an inboard spragging device 32 in contact with the second face 28B of the disc 28, a sleeve 34 which is fixed longitudinally with respect to the shaft 14, and a biasing spring 36 disposed between the fixed sleeve 34 and the inner spragging device 32.

The inboard spragging device 32 is in the form of an annular plate with a inner rim 32A and an outer rim 32B. The inner rim 32A has substantially the same circumference as the shaft 14 and frictionaly engages shaft 14 so that device 32 will only move along the shaft 14 if a force greater than a predetermined has been applied. The outer rim 32B is in contact with second face 28B of the disc 28.

The spragging device 32 is inclined at an angle α relative to the shaft 14 such that the inner rim 32A is located at a distance in the inboard direction from the disc 28. The spragging device 32 is resiliently biased against the disc 28, a force needing to be applied to move outer rim 32B in the inboard direction and increase the angle of inclination relative to the shaft 14.

The force required to slide the spragging device 32 along the shaft 14 is different in the two axial directions. When a force is applied on the spragging device 32 to push it in the inboard direction a moment is created between the outer and inner rims 32A and 32B increasing α the angle between the spragging device 32 and the shaft 14 and thereby forcing the inner rim 32A into closer contact with the shaft 14. Consequently a large force is required to force the spragging device 32 in the inboard direction. The brake disc 28 moves to the right when shown in figure 1, as a result of wear of the fixed pad, then the angle α will decrease, thereby reducing the friction between the spragging device and the shaft, thereby allowing biasing spring 36 (see below) to slide the spragging device along the shaft.

The biasing spring 36 is disposed between the fixed sleeve 34 and the inboard spragging device 32 is a helical spring surrounding the shaft 14. The biasing spring 36 keeps device 32 in contact with the second face 28B of the disc 28 by forcing the spragging device in the easier to push outboard direction, but is not strong enough to force the inner rim 32a any further in the outboard direction once the outer rim 32b is in contact with the disc 28 which would require increasing the angle α against the resilient bias of the device 32.

Because the inboard spragging device 32 requires a large force to move in the inboard direction and because the device 32 is kept in contact with the disc 28, the device 32 reduces movement of the disc 28 axially along the shaft 14 in the inboard direction.

Beneficially any problems with dragging and therefore overheating of the brakes are reduced.

On the outboard side of disc 28 is an outboard spragging device 38. The outboard spragging device 38 is of similar construction to the inboard spragging device 32 and is also in the form of an annular plate with a inner rim 38A an outer rim 38B.

The inner rim 38A has a circumference similar to that of the outer surface of shaft 14 and is friction engaged with it, whilst outer rim 38b is in contact with the first face 28A of disc 28.

Outboard spragging device 38 is inclined at an angle β to the of shaft 14 where β is a greater angle than α. Outboard spragging device 38 is also considerably thinner than inboard spragging device 32 and is preferably made of weaker material. Due to the weaker and less inclined nature of the outer spragging device 38 the outer rim 38B can be pushed more easily in the outboard direction so as to increase angle β.

The inner rim 38A of spragging device 38 is substantially inline with the first surface 22 of the fixed brake pad 20. The disc 28 is in contact with the outer rim 38B and therefore the inclined nature of the spragging device 38 defines the running clearance RC between the first surface 28a of the brake disc 28 and the first surface 22 of the brake disc 20 as being the axial distance between inner and outer rims 32A and 32B.

The outboard spragging device 38 is reduced in strength relative to inner spragging device 32 but is still resiliently biased against the disc 28 and reduces movement of the slidable brake disc 28 in the outboard direction when in the brake off position. Consequently the running clearance RC is desirably maintained at the same distance whilst the brake is off.

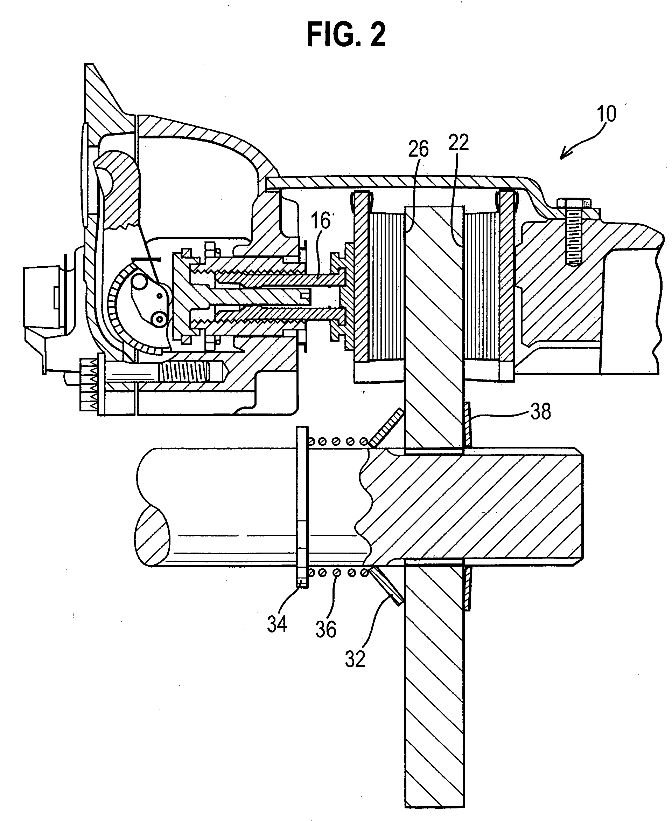

In Figure 2 brake disc system 10 is shown with the brake applied. As shown the piston 16 has been moved significantly in the outboard direction so that the moveable brake pad 26 is in contact with brake disc 28. In this position the brake disc 28 is clamped with great force between the first surface 22 of fixed brake pad 20 and second surface 26 of moveable brake pad 24.

The running clearance RC between the disc 28 and the first surface 22 of the brake pad has been reduced to zero since the brake force of the piston 16 is great enough to overcome the resilience of outboard spragging device 38 such that outer rim 38B is pushed back to be substantially inline with both inner rim 38A and surface 22 of the brake pad 20. The inner rim 38a of device 38 is in the same axial position as in Figure 1 since a greater force is required to move the device 38 in the outboard direction than to increase angle β. Consequently the outboard spragging device 38 is substantially vertical and parallel with brake disc 28.C

Outer rim 32A of inner spragging device 32 is still in contact with second face 28B of disc 28 and the device 32 is inclined at angle less than α since the inner rim has not yet, at this stage, moved axially relative to the shaft.

When the brake is released, the piston 16 and moveable brake pad 24 retract back to the positions shown in Figure 1. The force compressing outer spragging device 38 against its resilient bias is removed and so the spragging device 38 returns to its previous inclined position shown in Figure 1 with the outer rim 38B forcing the disc 28 to the position of Figure 1 and restoring the running clearance RC.

The force produced by the outboard spragging device 38 returning from the substantially upright position in Figure 2 to the inclined position of Figure 1 is sufficient to force inboard spragging device 32 to the position depicted in Figure 1. Thus, it can be seen that device 32 biases brake disc 28 to the right, whereas device 38 biases brake disc to the left, and therefore the brake disc will move to a position where the bias forces of the spragging device 32 and 38 are balanced.

Over time the material of pads 20 and 24 will wear. When the outboard pad 20 wears the running clearance RC between the first face 28A and the first surface 22 is temporarily increased. However when the brake is applied the disc 28 is pushed beyond the position shown in Figure 2 to the new retracted position of first surface 22 of worn pad 20. With the disc 28 forced beyond this position the already upright spragging device 38 is slid axially from the location shown in Figure 2 along the shaft 14 in a outboard direction so that spragging device 38 is substantially in line with a the new more outboard position of first surface 22. The brake force being easily large enough to move spragging device 38 in the outboard direction. As the brake disc 28 moves away from spragging device 32, the angle α decreases to a point where spring 36 is capable of pushing spragging device 32 along the shaft. Spring 36 will continue to push spragging device 32 along the shaft until the outer rim 32B contacts disc 28.

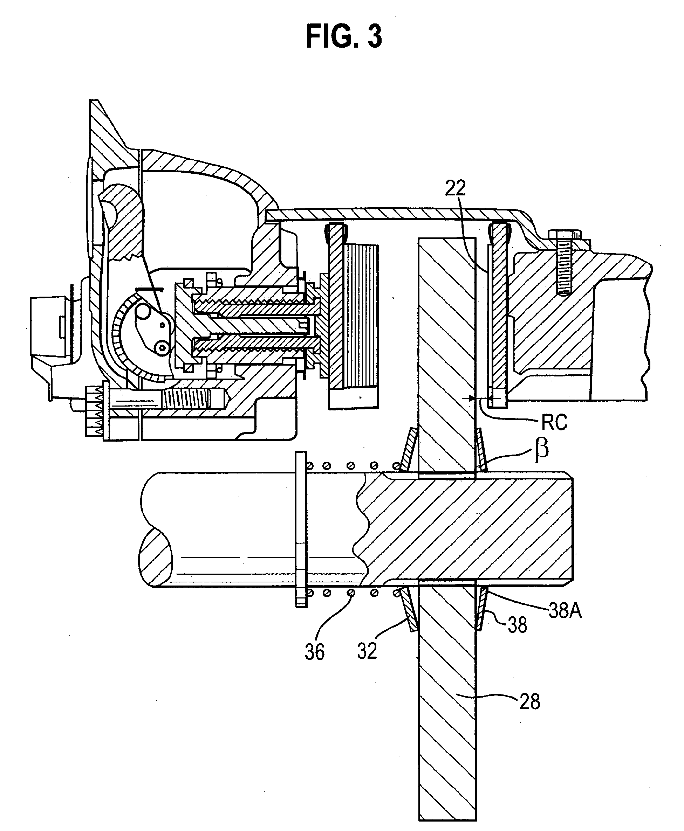

When the brake is released the moveable brake pad 24 is returned and the system moves to position shown in Figure 3.

Thus, in Figure 3 it can be seen that the inner rim 38A of outer spragging device 38 is in a position substantially inline with the new position of first surface 22. The outer rim 38A of outboard spragging device 38 has moved back relative to inner rim 38a to restore original inclined angle β with the shaft 14. Consequently the disc 28 has been pushed back in the inboard direction so that running clearance RC is identical to previous running clearance RC with an unworn pad shown in Figure 1.

Referring to Figure 3, the inboard spragging device 32 has maintained contact with the second face 28B of disc 28, with biasing spring 36 having uncompressed significantly from the position shown in Figure 1 accommodating the further outboard location of the disc 28 relative to in Figure 1.

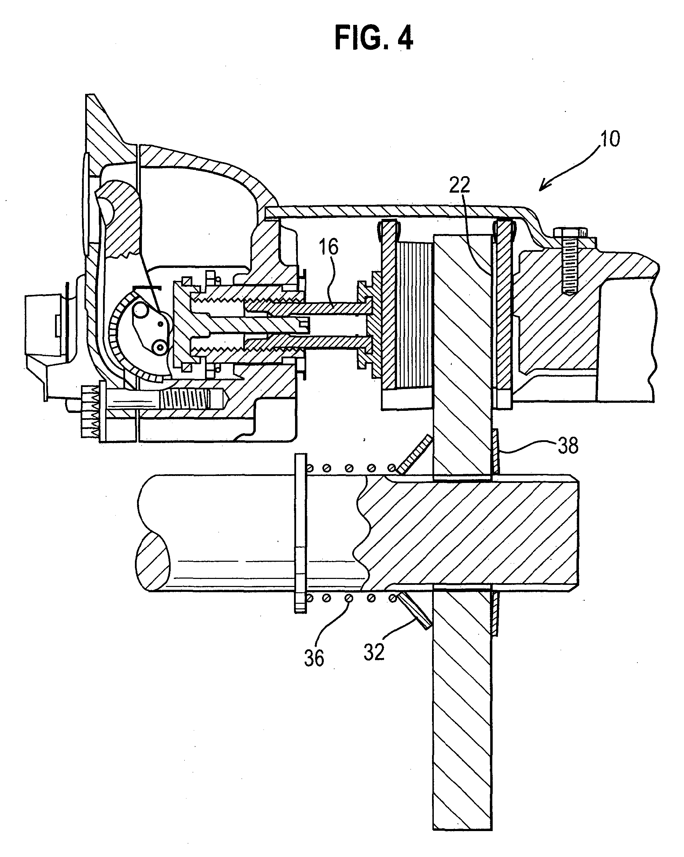

Thus, in Figure 4 the braking system 10 is shown with the inner fixed brake pad 20 in the same worn state as in Figure 3 but with system 10 depicted with the brake applied and the disc 28 clamped between the pads 20 and 24. In this configuration the outer spragging device 38 has been compressed to a substantially upright position substantially inline with the first surface 22 as in the configuration depicted in Figure 2. Inboard spragging device 32 remains in contact with the second face 28B of disc 28.

As can be seen with reference to figures 1 to 4 the running clearance RC between the disc 28 and the first surface 22 of the brake pad 20 is substantially the same distance whenever the brake is released. The outboard spragging device 38 ensures that the disc 28 is positively restored to distance RC from the first surface 22 thereby avoiding the need for vibrations and knocks to separate the disc 28 from the brake pad 20 and so reducing unnecessary heat and wear.

In summary then, when the brake is not applied and the pads are unworn, the brake disc 28 sits at an equilibrium position wherein spragging device 32 sits at an angle α relative to the shaft and spragging device 38 sits at an angle β relative to the shaft.

Upon application of the brake, the inboard brake pad moves the brake disc to the right such that it engages the outboard brake pad. This results in angle β increasing and angle α decreasing. However, the inner rims 32A and 38A of the spragging devices do not move axially relative to the shaft. Upon release of the brake the disc returns to its "brake off" position.

However, when the fixed brake pads wears to a significant amount, an application of the brake will cause the moveable brake pad to force the disc along the shaft. Angle β will increase to substantially 90 degrees, whereupon the outboard spragging device will also start to slide along the shaft. As this occurs, angle α will decrease to such an extent that spring 36 is able to slide inboard spragging device 32 along the shaft, thereby maintaining outer rim 32B in engagement with the disc. Upon release of the brake, the disc 28 returns to an equilibrium position defined by the inboard and outboard spragging devices wherein the outboard spragging device is angled at angle β of the shaft and the inboard spring device is angled at angle α relative to the shaft,

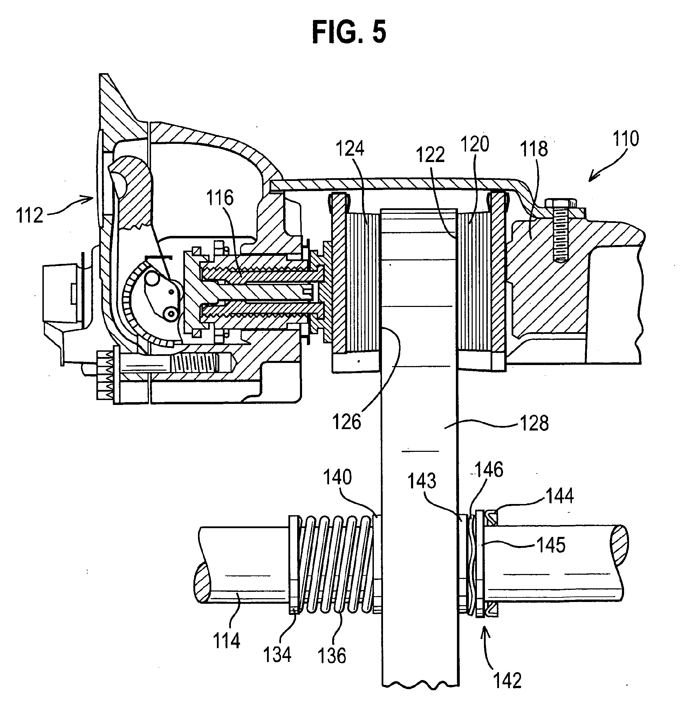

A second embodiment of brake disc system of 110 is shown in Figure 5 with the brake applied. Substantially identical components and components which have substantially the same function as components in brake system 10 are give corresponding reference numbers except with a prefix of 1.

In Figure 5 disc 128 is shown in the brake position clamped between pads 120 and 124. Brake system 110 does not have a inner spragging device and instead has a moveable sleeve 142 in contact with second face 128A of the disc 128. A biasing spring 136 is disposed between the movable sleeve 140 and a fixed sleeve 134. When in the brake off position (not shown) movement of disc 128 in the inboard direction is reduced by the biasing spring 236.

On the outboard side of the disc 128 there is a positioning device (disc positioner) 142 instead of an outboard spragging device. The positioning device is slidable on shaft 114 and is in contact with first face 128a of disc 128.

Positioning device 142 includes a first flange 143 a second flange 145, a tolerance ring 144 and a spring 146. First flange 143 is in contact with the disc 128 and separated from the second flange 145 by the spring 146. Tolerance ring 144 is adjacent to the second flange 145 on its outboard side.

In Figure 5 spring 146 is compressed between first and second flanges 143 and 145 with the first flange substantially inline with first surface 122 of disc plate 120. When the brake is released and the moveable brake pad 124 is retracted, the clamping force on disc 128 is removed and spring 146 uncompresses forcing first flange 143 and disc 128 in the inboard direction. This creates running clearance RC between the disc 128 and first surface 122 of hub 120 as with system 10. Disc 128 will achieve an equilibrium position wherein the forces applied by spring 136 to the right balance the forces applied by spring 146 to the left.

When in the brake off position, movement of the disc 128 in the outboard direction is mitigated by the resilience of spring 146.

Tolerance ring 144 is fictionally engaged with the shaft 144 and will only move in the outboard direction when a force above predetermined amount is applied. Disc run-out and vibrations which cause movement of the disc 128 when in the brake off position are not sufficient to move the axial position of 144 and hence if there is any movement of 128 in the outboard direction without the brake being applied it will be absorbed by spring 146.

When the fixed brake pad 120 wears and the first surface 122 is located further in the outboard direction, first flange 143 is no longer inline with the first surface 122. Consequently when the brake is applied and disc 128 is pushed in the outboard direction by pad 124 the disc 128 contacts flange 143 before hitting the brake pad 120. The force of the brake asserted through the piston is greater than the force required to move the tolerance ring 144 along the shaft 114 and so when the disc 128 is forced onto the first flange 143, spring 146 is compressed and all of the positioning device 142 is slid along the shaft 144 until disc 128 makes contact with the surface 122. At this point first flange 143 is substantially in line with the first surface 122 of the worn outboard brake pad 120 .

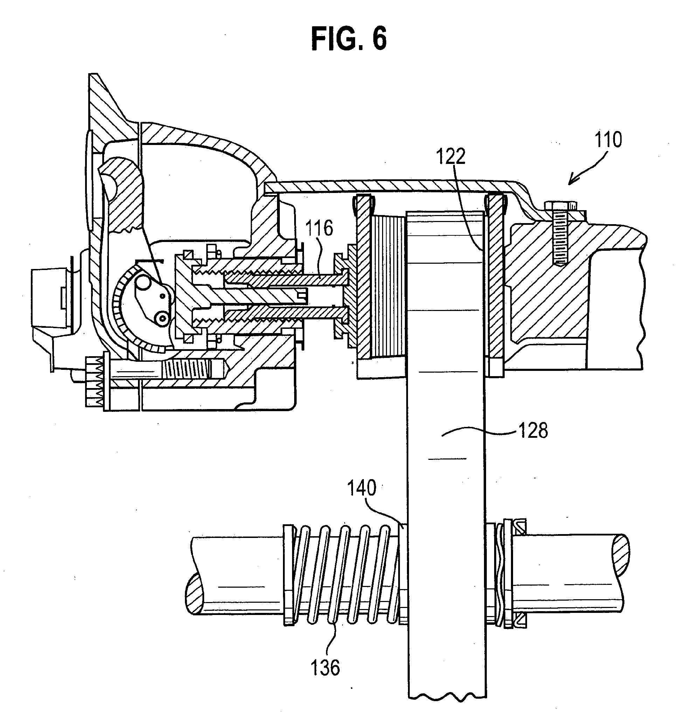

The braking system 110 with the brake applied after substantially pad wear of pad 120 is shown in Figure 6. As shown the positioning device 142 has been moved axially in the outboard direction from its position depicted in Figure 5 so that first flange 143 is in line with the new axial location of surface 122. The biasing spring device 136 is expanded from its position in Figure 5 such that moveable sleeve 140 is maintained in contact with second face 128B of disc 128.

When the brake is released and piston 116 and pad 124 are retracted, spring 146 uncompresses again forcing first flange 143 and disc 128 in the inboard direction. Running clearance RC is thereby restored. It would be appreciated that spring 146 is a relatively high rate spring but with a relatively short uncompressed length. This can be contrasted with spring 136 which is a relatively low rate spring but with a relatively long uncompressed length.

In the brake off position, positioning device 144 and biasing spring 136 reduce movement of the disc in the outboard and inboard directions respectively in the same manner as before the pad 120 was worn.

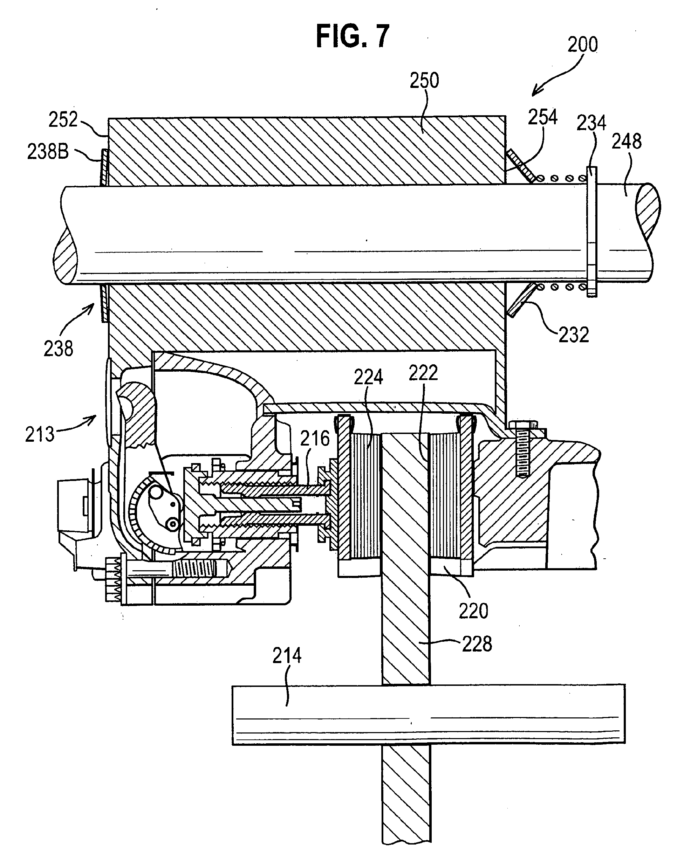

A further embodiment of disc braking system 210 according to the invention, is depicted in Figure 7. Substantially identical components or components with substantially the same function as components in system 10 are given the same reference number but with prefix of a 2.

The system 210 is depicted in Figure 7 in the brake position with little or no brake pad wear having occurred.

Brake system 210 has a slidable caliper 213 substantially similar to the fixed caliper 212 shown in Figure 1 except that rather than being fixed to the suspension component it is slidable along a pin 148 (mounted on a suspension component) via a bushing element 250. In this case disc 228 is fixed relative to shaft 214.

As shown in Figure 7 brake disc system 210 has no disc positioning elements on the shaft 214 but instead has spragging devices located on the pin 248.

Brake system 210 includes a first spragging device 238 substantially identical to outboard spragging device 38 but located on the inboard side of caliper 213. The outer rim 238B of the first spragging device 238 is in contact with the inboard face 252 of the bushing element 250. In the brake position depicted in Figure 7 first spragging device 238 is in a compressed state and substantially all of the spragging device 238 is in contact with the inboard face 252.

In contact with the outboard face 254 of bushing element 250 is a second spragging device 232 substantially identical to inboard spragging device 32 but located on the outboard side. Also located on the outboard side is a fixed sleeve 234 and a spring 236 disposed between the fixed sleeve 234 and the second spragging device 232.

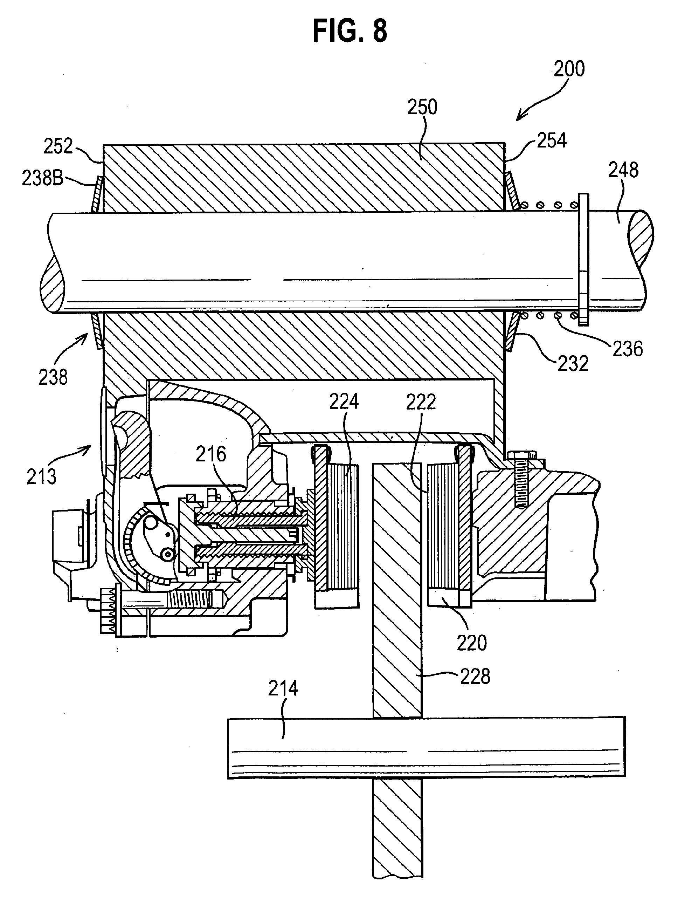

When the brake force is released the first spragging device 238 uncompresses and inclines at angle α to the pin 148 forcing the bushing element 250 and connected caliper 213 in the outboard direction. As shown in Figure 8 a running clearance RC is therefore created between disc 228 and surface 222 of fixed brake pad 220, the running clearance RC being equal to the distance between inner rim 238A and outer rim 238B of the first spragging device when inclined at angle α.

The force needed to compress biasing spring 236 is less than that needed to compress spragging device 238 and so biasing spring is compressed by the movement of the caliper 213.

In the brake off position shown in Figure 8 spragging devices 238 and 232 restrain movement of the caliper 213 relative to the disc 228 is the same manner as spragging devices 32 and 38 of system 110 restrain movement of the disc 128 with respect of the shaft 114 and gives similar benefits.

Instead of spragging devices 232 and 238 system 210 could use a positioning device and moveable sleeve equivalent to system 110 but disposed on the pin 248.

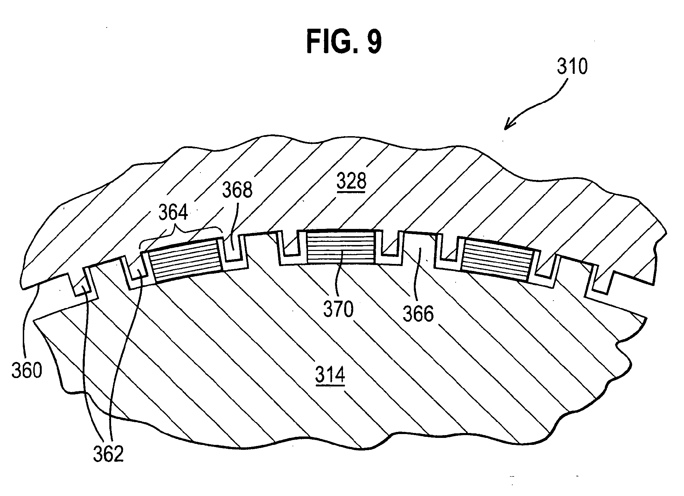

A cross sectional view of part of a fourth embodiment of brake disc system 310 according to the invention is shown in Figure 9. Figure 9 illustrates the cross section of the interface between moveable brake disc 328 and shaft 314. Substantially identical components or components with substantially the same function as components in system 10 are given the same reference number but with prefix of a 3.

Slidable brake disc 328 has an inner surface 360, which inner surface 360 comprises a series of pairs of splines 362 located around its circumference. The gap 364 between each pair of splines 362 is larger than the gap between each of the splines 362 making up each pair.

The shaft 314 has an outer surface comprising a series of shaft splines 366 each co-operating with a corresponding pair of splines 362 on the disc 328. Located in the gaps 364 between pairs 362 are compliant members 370. These compliant members 370 are wedged between the disc 328 and shaft 314 reducing any rotational movement between the disc 328 and the shaft 314.

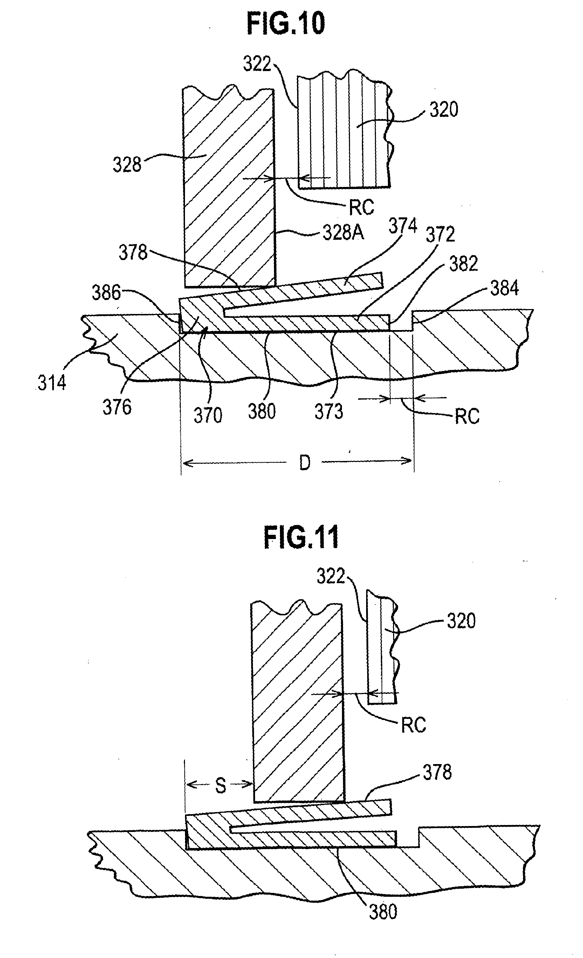

In Figure 10 is shown the side cross sectional view of the disc 328 and compliant member 370 in positions where little or no pad wear has occurred.

Compliant member 370 has a lower arm 372 and upper arm 374 connected by hinge 376. The two arms 372 and 374 are resiliently biased apart and have been partly compressed together in order to be inserted between disc 328 and shaft 314. Consequently complaint member 370 inserts a radial force on the disc 328.

Shaft 314 has a groove 380 extending axially a distance D along the shaft and delimited by abutments 384 and 386. The complaint member 370 is located within the groove 380 and the extent of possible axial movement relative to the shaft 314 is limited by the extent of the groove 380.

The brake disc 328 is engaged with compliant member 370 by its resilient nature and also by the large friction of the upper surface 378 of upper arm 374.

In the configuration depicted in Figure 10 a first face 328A of disc 328 is separated from first surface 322 of outboard fixed pad 320 by a running clearance RC. As shown. The running clearance RC is identical to the difference between the length of the compliant member 370 and the length D of the groove 380.

When the brake is applied the disc 328 is slid in the outboard direction until face 328A makes contact with surface 322. The upper surface 378 of upper arm 374 has a large coefficient of friction whilst the lower surface 373 of lower arm 372 which is in contact with shaft 314 has a significantly smaller coefficient of friction (alternatively the surface of groove 380 can have a smaller coefficient of friction than surface 360). Consequently compliant member 370 remains fast with disc 328 as it moves into contact with surface 322 while the compliant member 370 is more easily slid along the shaft 314 in the outboard direction. In the brake position with the disc 328 clamped, the outboard end face 382 of lower arm 372 is in contact with abutment 384 marking the end of groove 380.

When the brake is released the disc 328 and compliant member 370 are returned to the positions shown in Figure 10. The running clearance RC is prevented from increasing beyond its desired amount by abutment 386 which abuts hinge 376 in the desired position.

Movement of the disc 328 with respect of the shaft 314 while in the brake off position is mitigated by the resilience of complaint member 370 and the frictional forces between the surfaces 373 and 378 with the shaft 314 and disc 328 respectively.

On release of the brake the running clearance RC can be restored either through disc run out or vibrations in a conventional manner or by positive action using means such as those of spragging devices and springs depicted in figures 1 to 8. Such positive restoring means could be in contact with the disc 328 or with a compliant member 370, for example a resilient member could be located in group 380 between end face 382 and the abutment 384. In that example the groove 380 will be slightly longer such that total distance D of the groove will be equal to the length of the complaint member 370 and running clearance RC and the length of the resilient member in its most compressed state.

Fixed pad 320 will wear over time and therefore surface 322 will withdraw in the outboard direction. When the pad 320 is worn and the brake is applied the complaint member 370 will impact abutment 384 before disc face 328A makes contact with surface 322 of the disc pad 320. However, the brake force is large enough to overcome the friction of the upper surface 378 and consequently disc 328 will move axially along the upper surface 378 until it makes contact with the brake pad 320.

When the brake force is released, positive restoring means or disc run out and vibrations will move the complaint member 370, which is frictionally fast with the disc 328, in the inboard direction until hinge 376 makes contact with abutment 386.

The position of the disc 328 relative to the complaint member 370 after release of the brake after significant pad wear is shown in Figure 11. The disc 328 is located a distance S inboard from the hinge 376 equivalent to the amount the pad 320 has worn, the running clearance RC being substantially identical to in Figure 10.

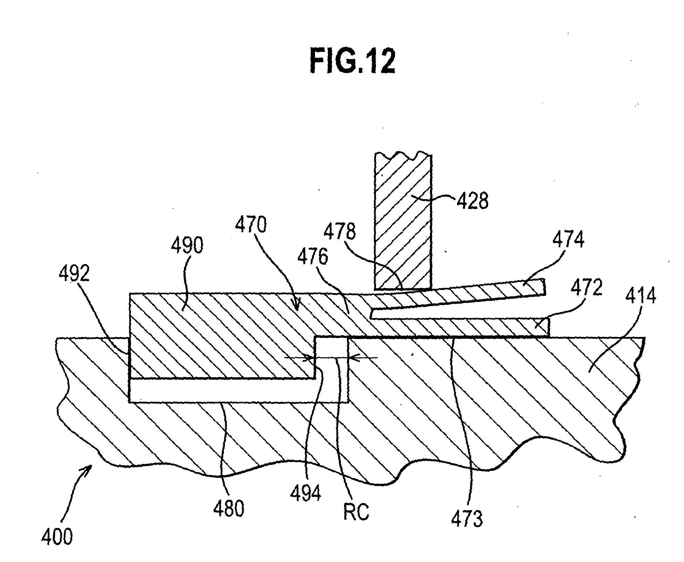

In Figure 12 is shown the interface between disc 428 and shaft 414 of a fifth embodiment of system 400. Substantially identical components or components with substantially the same function as components in system 310 are given the same reference number but with prefix of a 4 instead of a 3.

Compliant member 470 has a lower arm 472 and upper arm 474 connected by hinge 476, and has a connecting section 490. The two arms 472 and 474 are resiliently biased apart and have been partly compressed together in order to be inserted between disc 428 and shaft 414. Consequently complaint member 470 exerts a radial force on the disc 428.

The arms 472 and 474 of each compliant member 470 are located in similar or identical positions to compliant members 370 and therefore the view shown in Figure 9 applies to this system 400 also. Connecting portion 490 is substantially cylindrical and has a plurality of compliant members 470 attached at one end thereof. As such, the plurality of compliant members 470 and the connecting portion 490 form a single easy handleable component. Connecting portion 490 includes a longitudinal slit to allow the portion 490 to be temporarily stretched to a larger diameter in order to be assembled over the splines 462. In this case the connecting portion is made for a resilient material causing the portion to spring back to its normal smaller diameter once in place for use.

In an alternative construction the connecting portion 490 consists of two separate arcuate portions, each of typically 180 degrees. A plurality of compliant members 470 is connected to each arcuate connecting portion 490. Such an arrangement provides two easily handleable components that can be individually assembled onto the shaft.

Thus the connecting portion or portions 490 allow multiple compliant members 470 to be located simultaneously. Additionally connecting portion 490 is located in groove 480 rather than the arm 472. The connecting portion 490 having abutments 492 and 494 for abutting the ends of groove 480, and the difference between to the length of the groove 480 and the distance between abutments 492 and 494 being substantially identical to the running clearance. Consequently system 400 once in place works in a similar manner to system 310.

## Claims

1. A brake system including
a brake disc having first and second disc faces on respective first and second sides of the brake disc and being mounted rotatably fast with but longitudinally slidable on a rotatable shaft,
the brake disc being clampable between a first friction surface of a fixed brake pad positioned on the first side and a second friction surface of a moveable brake pad positioned on the second side,
the system further including
a disc positioner operable to define a running clearance between the first disc face and the first friction surface, the disc positioner being adjustable to maintain the running clearance as the first brake pad wears,
and biasing means located on the second side of the disc brake which biasing means maintains contact between the disc positioner and first face of the disc.

2. A brake system according to claim 1 in which the biasing means comprises a helical spring.

3. A brake system including
a brake disc having first and second disc faces on respective first and second sides of the brake disc and being mounted rotatably fast with but longitudinally slidable on a rotatable shaft,
the brake disc being clampable between a first friction surface of a fixed brake pad positioned on the first side and a second friction surface of a moveable brake pad positioned on the second side,
the system further including a disc positioner operable to define a running clearance between the first disc face and the first friction surface,
the disc positioner being adjustable to maintain the running clearance as the first brake pad wears,
wherein the disc positioner comprises a sprag surrounding the shaft, resiliently biased against and in contact with the first face of the brake disc, the sprag being inclined at an angle to the first face whilst the brake is not applied and compressing to a position substantially in line with the first face and first surface when the brake is applied.

4. A brake system according to any preceding claim in which the axial position of the disc positioner on the shaft is frictionaly maintained during braking unless pad wear of the fixed brake pad occurs during an application of the brake.

5. A brake system according to any preceding claim in which the disc positioner is slid along the shaft by the brake disc to maintain the running clearance as the fixed pad wears.

6. A brake system according to claim 5 wherein the amount of force required to slide the disc positioner is less than the brake force but greater than the resilience of the disc positioner.

7. A brake system including
a brake disc having first and second disc faces on respective first and second sides of the brake disc and being mounted rotatably fast with but longitudinally slidable on a rotatable shaft,
the brake disc being clampable between a first friction surface of a fixed brake pad positioned on the first side and a second friction surface of a moveable brake pad positioned on the second side,
the system further including a disc positioner operable to define a running clearance between the first disc face and the first friction surface,
the disc positioner being adjustable to maintain the running clearance as the first brake pad wears, and being frictionaly engaged with the brake disc, the disc and disc positioner being frictionaly fast on axial movement of the disc relative to the shaft unless pad wear of the fixed brake pad occurs during an application of the brake, wherein the disc positioner is limited to a predetermined amount of axial movement relative to the shaft, thereby defining the running clearance, and in which the disc is slid relative to the disc positioner to maintain the running clearance as the fixed brake pad wears.

8. A brake system according to claim 7 in which the disc positioner comprises a compliant member located between the disc and shaft and resiliently biasing the disc radially away from the shaft, the compliant member having an outer surface adjacent the disc and an inner surface adjacent the shaft, the inner surface, being slidable along the shaft and having a lower coefficient of friction than the outer surface along which the disc slides as the fixed brake pad wears.

9. A brake system according to claim 8 which includes a plurality of the compliant members circumferentialy spaced around the shaft.

10. A brake system according to any preceding claim in which the disc positioner is slidably mounted on the shaft.

11. A brake system according to any preceding claim in which the disc positioner is axially resilient allowing the first disc face to engage the first surface when the brake is applied but positively restoring the running clearance between the face and surface when the brake is released.

12. A brake system according to any preceding claim including a resilient element located on the second side of the brake disc and in contact with the second face of the brake disc, the resilient element restraining axial movement of the brake disc in the direction of the second side.

13. A brake system according to claim 12 wherein the resilient element comprises a sprag surrounding the shaft, resiliently biased against the second face of the brake disc, the sprag being inclined at an angle to the second face.

14. A brake system including
a brake disc having first and second disc faces on respective first and second sides of the brake disc and being mounted rotatably fast with a rotatable shaft,
the brake disc being clampable between a first friction surface of a fixed brake pad positioned on the first side and a second friction surface of a moveable brake pad positioned on the second side,
the brake pads being mounted in a floating caliper which is longitudinally slidable on a pin,
the system further including a caliper positioner operable to define a running clearance between the first disc face and the first friction surface,
the caliper positioner being adjustable to maintain the running clearance as the first brake pad wears.

15. A brake system according to claim 14 in which the caliper positioner has one or more of the features of the disc positioner a defined in claims 1 to 19 with any defined features relating to the shaft for the disc positioner relating to the pin for the caliper positioner.
